(19) Europäisches Patentamt
European Patent Office
Office européen des brevets

(11) **EP 1 964 231 B1**

(12) **EUROPÄISCHE PATENTSCHRIFT**

(45) Veröffentlichungstag und Bekanntmachung des Hinweises auf die Patenterteilung:
**17.08.2011 Patentblatt 2011/33**

(21) Anmeldenummer: **06829721.7**

(22) Anmeldetag: **18.12.2006**

(51) Int Cl.:
*H02H 11/00* (2006.01)

(86) Internationale Anmeldenummer:
**PCT/EP2006/012203**

(87) Internationale Veröffentlichungsnummer:
**WO 2007/079924 (19.07.2007 Gazette 2007/29)**

(54) **MOTORSTEUERSCHALTUNG MIT FEHLERÜBERWACHUNG**

MOTOR CONTROL CIRCUIT WITH MALFUNCTION MONITORING

CIRCUIT DE COMMANDE DE MOTEUR COMPRENANT UN SYSTÈME DE SURVEILLANCE DES ERREURS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.12.2005 DE 102005061215**

(43) Veröffentlichungstag der Anmeldung:
**03.09.2008 Patentblatt 2008/36**

(73) Patentinhaber: **Lucas Automotive GmbH
56070 Koblenz (DE)**

(72) Erfinder:
• **MÜHLENBEIN, Rudolf
53501 Graftschaft (DE)**
• **NESTLER, Andreas
18107 Elmenhorst/Lichtenhagen (DE)**

(74) Vertreter: **Schmidt, Steffen J.
Wuesthoff & Wuesthoff
Patent- und Rechtsanwälte
Schweigerstrasse 2
81541 München (DE)**

(56) Entgegenhaltungen:
**DE-A1- 10 050 287     DE-A1- 19 941 489**

## Beschreibung

Hintergrund der Erfindung

Die Erfindung betrifft eine Steuerschaltung, die einer sicherheitskritischen Ansteuerung eines an einer Gleichspannungsquelle anzuschließenden elektrischen Verbrauchers mit induktivem Lastanteil (z.B. Gleichstrommotor) dient. Außerdem betrifft die Erfindung ein Verfahren zur Fehlerüberwachung in einer derartigen Steuerschaltung. Das Ansteuern von elektrischen Verbrauchern unterliegt in vielen Anwendungsbereichen hohen Sicherheitsanforderungen. Um diesen Anforderungen gerecht zu werden, werden für die Ansteuerung von z.B. Gleichstrommotoren oftmals Steuerschaltungen eingesetzt, die mehrere Baugruppen mit Schutzfunktionen aufweisen. Um Fehlfunktionen der Ansteuerschaltung frühzeitig zu erkennen, wird durch die vorliegende Erfindung eine Steuerschaltung mit zusätzlicher Fehlerüberwachung vorgeschlagen.

Stand der Technik

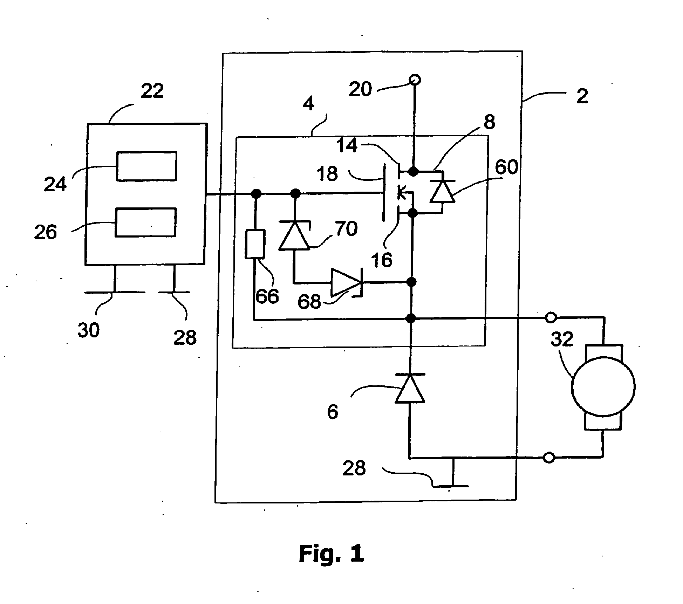

Gleichstrommotoren werden heutzutage oftmals mit Hilfe einer in der Steuerschaltung integrierten Leistungsansteuerbaugruppe gesteuert. Die Leistungsansteuerbaugruppe trennt oder verbindet den Gleichstrommotor elektrisch von/mit der Gleichspannungsquelle. Ein hierfür geeigneter, aus der betrieblichen Praxis der Anmelderin bekannter Schaltungsaufbau sieht vor, die Leistungsansteuerbaugruppe als Verbindungsglied zwischen eine Speisespannungsquelle und dem Gleichstrommotor zu schalten. In Fig. 1 wird eine solche Anordnung der Leistungsansteuerbaugruppe dargestellt.

In der Entgegenhaltung (1) (DE 100 50 287) ist eine Schutzeinrichtung für die Ansteuerung für unipolare Gleichstrommotoren beschrieben, die eine kompakte Bauform der Ansteuerschaltungskomponenten ermöglicht und eine thermische Überlastung der Komponenten verhindert.

Aus der Entgegenhaltung (2) (DE 101 18 401) ist eine Gleichstromansteuerungsvorrichtung bekannt. Die Gleichstromansteuerungsvorrichtung hat an einem ersten Strompfad zwischen einer Gleichstromversorgung und einem Gleichstrommotor eine Schalteinrichtung, und eine Erfassungseinrichtung, welche eine Spannung an einem zweiten Strompfad zwischen dem Gleichstrommotor und der Schalteinrichtung erfasst.

Als weiteres Beispiel wird DE 199 41 489 genannt.

Die Schalteinrichtung hat mehrere Schaltelemente und die Erfassungseinrichtung hat mehrere Erfässungselemente. Jedes Schaltelement ist an dem ersten Strompfad vorgesehen. Jedes Erfassungselement erfasst die Spannung an dem zweiten Strompfad. Jeder der ersten Strompfade beinhaltet jeweils einen der zweiten Strompfade. Eine Beurteilungseinrichtung urteilt, dass ein Fehler auf einem dritten Strompfad von der Gleichstromversorgung zu den Schalteinrichtungen über die Gleichstrommotoren vorliegt, wenn eine der Spannungen von der Erfassungseinrichtung sich nicht ändert.

Die in Fig. 1 dargestellte Steuerschaltung 2 weist neben der Leistungsansteuerbaugruppe 4 eine Freilaufdiode 6 auf. Die Leistungsansteuerbaugruppe 4 hat einen Leistungs-MOSFET (8) mit drei Anschlüssen (Drain 14, Source 16, Gate 18). Der Drain-Anschluss 14 ist mit der Speisespannungsquelle 20 verbunden. Zum Ansteuern des MOSFETs 8 dient eine Kontrollbaugruppe 22. Diese beinhaltet eine Ladungspumpe (24), die die Gate-Spannung (18) des MOSFETs 8 liefert, und einen Mikrocontroller 26 zum Steuern des MOSFETs 8. Die Kontrollbaugruppe 22 ist mit dem Gate-Anschluss 18 des MOSFETs 8 verbunden und über zwei weitere Anschlüsse auf unterschiedlich ausgeführte Massen (GND_P 28 und GND 30) gelegt. Parallel zum Gate-Source-Pfad des MOSFETs 8 der Leistungsansteuerbaugruppe 4 ist ein ohmscher Widerstand 66 geschaltet. Ebenfalls parallel zum Gate-Source-Pfad des MOSFETs 8 der Leistungsansteuerbaugruppe 4 ist die Reihenschaltung aus zwei Zener-Dioden 68, 70 geschaltet. Da die Anoden der Zener-Dioden 68, 70 zusammengeschaltet sind, ist deren Wirkung mit der eines elektrischen Widerstandes, bzw. einer bidirektional arbeitenden Begrenzungsdiode zu vergleichen. Der MOSFET 8 dient als Halbleiterschalter, dessen jeweiligen Schaltzustand der Mikrocontroller 26 festlegt. Bei einem elektrischen Trennen des Gleichstrommotors 32 von der Speisespannungsquelle 20 durch die Leistungsansteuerbaugruppe 4 erzeugt der induktive Lastanteil des Gleichstrommotors 32 aufgrund von Selbstinduktion u.a. eine unerwünschte Spannungsspitze. Die in der Motorinduktivität gespeicherte Energie, aber auch Energie der Speisespannungsquelle 20 werden dabei über den MOSFET 8 der Leistungsansteuerbaugruppe 4 abgebaut. Zum Schutz des MOSFETs 8 der Leistungsansteuerbaugruppe 4 ist parallel zum Gleichstrommotor 32 eine als Freilaufdiode 6 wirkende Leistungsdiode geschaltet. Diese ist bezüglich der Speisespannungsquelle 20 in Sperrichtung geschaltet und hat die Aufgabe, die bei einem elektrischen Trennen der Speisespannungsquelle 20 vom Gleichstrommotor 32 auftretende Spannungsspitze abzubauen. Die Parallelschaltung aus Gleichstrommotor 32 und Freilaufdiode 6 ist mit dem Source-Anschluss 16 des MOSFETs 8 verbunden. Der zweite Anschluss dieser Parallelschaltung ist auf Masse 28 gelegt.

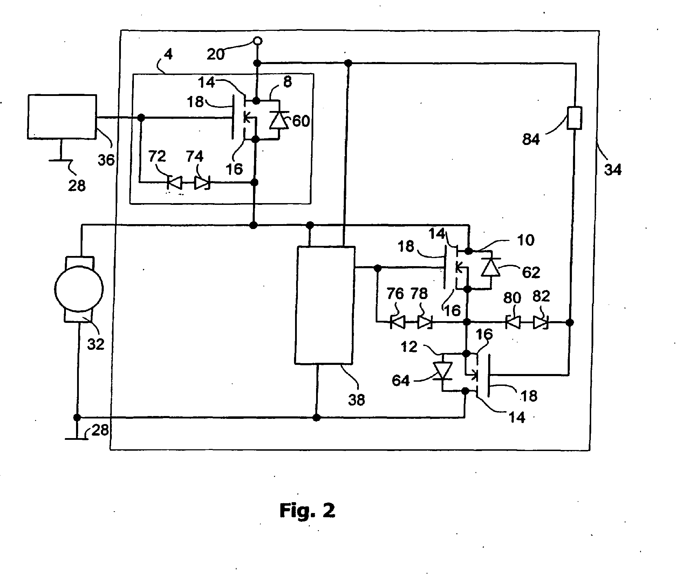

Eine Weiterentwicklung der in Fig. 1 dargestellten Steuerschaltung 2 sieht vor, die Steuerschaltung 2 um ein Verpolschutz-MOSFET 12 zu erweitern. Gleichzeitig ist die Freilaufdiode 6 aus Fig. 1 durch einen Freilauf MOSFET 10 ersetzt, dessen intrinsische Diode 62 im Sperrbetrieb des Freilauf-MOSFETs 10 als Freilaufdiode wirkt. Die daraus resultierende Steuerschaltung 34 mit Leistungsansteuerbaugruppe 4, Freilauf-MOSFET 10 und Verpolschutz-MOSFET 12 ist, so wie aus der DE 10050287 A1 bekannt, in Fig. 2 dargestellt.

Die in Fig. 2 dargestellte Steuerschaltung 34 weist eine zur Steuerschaltung 2 in Fig. 1 äquivalente Leistungsansteuerbaugruppe 4 auf. Der Drain-Anschluss 14 des MOSFETs 8 der Leistungsansteuerbaugruppe 4 ist mit der Speisespannungsquelle 20 verbunden. Eine Ansteuerung des MOSFETs 8 erfolgt über den Gate-Anschluss 18 durch eine PCU 36 Power Control Unit. Ein weiterer Anschluss der PCU 36 ist auf Masse 28 gelegt. Der Source-Anschluss 16 des MOSFETs 8 ist mit dem Gleichstrommotor 32, einem Nullpunktkomparator 38 und dem Drain-Anschluss 14 des Freilauf-MOSFETs 10 verbunden. Mit einem zweiten Anschluss ist der Gleichstrommotor 32 und der Nullpunktkomparator 38 auf Masse 28 gelegt. Zum Ansteuern des Freilauf-MOSFETs 10 ist dessen Gate-Anschluss 18 mit dem Nullpunktkomparator 38 verbunden. Eine direkte Verbindung bilden der Source-Anschluss 16 des Freilauf-MOSFETs 10 und der des Verpolschutz-MOSFETs 12. Drain 14 des Verpolschutz-MOSFETs 12 ist auf Masse 28 gelegt. Zum Ansteuern des Verpolschutz-MOSFETs 12 ist dessen Gate-Anschluss 18 über einen ohmschen Widerstand 84 mit der Speisespannungsquelle 20 verbunden. Ebenfalls mit der Speisespannungsquelle 20 verbunden ist der Nullpunktkomparator 38. Die MOSFETs 8, 10, 12 der Steuerschaltung 34 haben jeweils eine parallel zum Gate-Source-Pfad geschaltete Reihenschaltung aus zwei Zener-Dioden. Da die Anoden der zwei Zener-Dioden jedes der drei Zener-Dioden-Paare 72, 74; 76, 78 und 80, 82 zusammengeschaltet sind, ist die Wirkung jedes Zener-Dioden-Paares mit der eines elektrischen Widerstandes, bzw. einer bidirektional arbeitenden Begrenzungsdiode zu vergleichen. Ferner verhalten sich die MOSFETs 8, 10, 12 der Steuerschaltung 34 im Sperrbetrieb wie eine parallel zum MOSFET geschaltete Diode (intrinsische Diode), deren Kathode am Drain-Anschluss 14 und deren Anode am Source-Anschluss 16 des MOSFETs herausgeführt ist.

Im Folgenden wird auf die Funktionsweise der in Abbildung 2 dargestellten Steuerschaltung 34 eingegangen. Hierin wirkt der MOSFET 8 der Leistungsansteuerbaugruppe 4 als Halbleiterschalter. Gesteuert durch eine PCU 36 verbindet dieser den Gleichstrommotor 32 mit der Speisespannungsquelle 20.

Die Funktion des Freilauf-MOSFETs 10 wird in den Abschaltphasen durch den Nullpunktkomparator 38 gesteuert. Dieser erkennt ein elektrisches Trennen zwischen Speisespannungsquelle 20 und Gleichstrommotor 32 anhand des negativen Potentials am Source-Anschluss 16 des MOSFETs 8 der Leistungsansteuerbaugruppe 4. Als Folge dessen speist der Nullpunktkomparator 38 den Freilauf MOSFET 10 mit einer Gate-Spannung. Während des gesamten Abschaltvorgangs bleibt der Freilauf-MOSFET 10 nun eingeschaltet. Verglichen mit der Freifaufdiode 6 in Fig. 1, tritt über den eingeschalteten Freilauf-MOSFET 10 ein geringerer Spannungsabfall auf. Neben der Verringerung der Verluste im Freilauf-MOSFET 10 wird gleichzeitig ein Tail-Strom im MOSFET 8 der Leistungsansteuerbaugruppe 4 beim Abschaltvorgang vermieden. Am Ende des Abschaltvorgangs nähert sich das Potential am Source-Anschluss 16 des MOSFETs 8 der Leistungsansteuerbaugruppe 4 wieder dem der Masse 28. Der Nullpunktkomparator 38 erkennt diesen Zustand und verringert das Gate-Potential des Freilauf-MOSFETs 10 bis dieser als reine Diode arbeitet. Eine unerwünschte Bremswirkung des Gleichstrommotors 32 durch einen negativen Stromfluss wird dadurch verhindert.

Der Verpotschutz-MOSFETs 12 hat die Aufgabe bei einer Verpolung den Freilauf-MOSFET 10 vor Überlastung zu schützen. Dieses wird durch das Sperrverhalten des Verpolschutz-MOSFETs 12 erreicht, welches ein Trennen des Freitauf-MOSFETs 10 von der Spannungsversorgung bewirkt.

Probleme im Stand der Technik

Häufig liegt der Ansteuerung der Leistungsansteuerbaugruppe durch die PCU eine bestimmte Taktrate zugrunde. Dabei trennt und verbindet die Leistungsansteuerbaugruppe innerhalb einer Taktperiode die Gleichspannungsquelle elektrisch von/mit der Steuerschaltung.

Das Reduzieren der Verluste beim Schaltvorgang durch den Einsatz einer Freilaufdiode oder eines Freilauf-MOSFETs ist bei niederfrequenten Taktraten von großer Bedeutung. Vorhandensein und fehlerfreie Funktionsfähigkeit einer Freilaufdiode oder eines Freilauf-MOSFETs stellen eine wichtige Voraussetzung für den Betrieb der Steuerschaltung in sicherheitskritischen Anwendungen dar. Hierzu zählen beispielsweise das ABS (Antiblockiersystem) oder die FDR (Fahrdynamikregelung) in der Fahrzeugtechnik. Die vorstehend beschriebenen Steuerschaltungen weisen keine Möglichkeit zur Fehlerüberwachung auf. Als Folge haben sie eine hohe Risikoprioritätszahl (Risk Priority Number, RPN) bei einer Fehlermöglichkeits- und Einflussanalyse (Failure Mode and Effects Analysis, FMEA).

Die Fehlerauftrittswahrscheinlichkeit ist gegenwärtig ausschließlich von den Herstellungsmöglichkeiten und den im praktischen Einsatz auftretenden Fehlern abhängig. Eine Verbesserung der Herstellungsmöglichkeiten ist jedoch aus technologischen oder wirtschaftlichen Gesichtspunkten oftmals nicht möglich.

Aufgabe der Erfindung

Der Erfindung liegt daher die Aufgabe zugrunde, eine Steuerschaltung aufzuzeigen, die in sicherheitskritischen Anwendungen zum Einsatz kommen kann und eine verringerte Risikoprioritätszahl bei einer Fehfermöglichkeits- und Einflussanalyse hat.

Erfindungsgemäße Lösung

Zur Lösung dieser Aufgabe weist die Steuerschaltung mit den Merkmalen des Anspruchs 1 einen Kontrollmechanismus auf, der der Fehlerüberwachung dient. Die Fehlerüberwachung der Steuerschaltung ist derart eingerichtet, dass an den Eingängen der Baugruppen Steuersignale einzuspeisen sind. Durch die Ansteuerung der Baugruppen sind unterschiedliche Betriebszustände der Steuerschaltung einzustellen. Ferner sind Ausgänge vorgesehen, an denen Spannungswerte auszulesen sind. Anhand dieser Werte bestimmt eine Diagnoseeinrichtung die Schaltzustände der Baugruppen.

Auf diese Weise ist eine Überprüfung der Funktionsfähigkeit der Baugruppe erreichbar. Neben dem Feststellen einer fehlerfreien Funktionsweise sind fehlerhafte Funktionen der Steuerschaltung erkennbar. Ferner sind durch den Vergleich mit Referenzwerten konkrete Ursachen für erkannte Fehlfunktionen zu identifizieren.

Durch die Einführung der Fehlerüberwachung sind zwei zentrale Ziele zu erreichen.

1. Der Ensatz der Fehlerüberwachung im Betriebszeitraum der Steuerschaltung führt zu einer Verbesserung der Fehlererkennungswahrscheinlichkeit.

2. Durch den Einsatz der Fehlerüberwachung, beispielsweise in einem Testlauf beim Hersteller, ist die Fehlerauftättswahrscheinlichkeit noch vor Auslieferung der Steuerschaltung an einen Kunden zu verringern.

Die Fehlerüberwachung der Steuerschaltung dient der sicherheitskritischen Steuerung eines an einer Gleichspannungsquelle anzuschließenden elektrischen Verbrauchers. Dabei kann der elektrische Verbraucher ein mit Gleichstrom zu betreibender Elektromotor (Gleichstrommotor) sein.

Um die Speisespannungsquelle elektrisch von der Steuerschaltung zu trennen oder sie mit ihr zu verbinden, weist die Steuerschaltung eine Leistungsansteuerbaugruppe auf. Diese beinhaltet einen ansteuerbaren ersten Halbleiterschalter. Dieser ist vorzugsweise ein MOSFET, der durch sein Durchlass- und Sperrverhalten zwei Schaltzustände generiert und über seinen Gate-Anschluss anzusteuern ist. Die Steuerung des ersten Halbleiterschalters kann dabei mit Hilfe eines Mikrocontrollers geschehen. Dabei generiert der Mikrocontroller Steuersignale, die das Durchlass- und Sperrverhalten des ersten Halbleiterschalters einstellen.

Weiterhin hat die Steuerschaltung eine Freilaufbaugruppe, die eine Freilaufdiode aufweist um die elektrische Spannungsspitze abzubauen, die durch das elektrische Trennen der Speisespannungsquelle vom Verbraucher durch Selbstinduktion entsteht. Je nach Ausgestaltung der Freilaufbaugruppe operiert die intrinsische Diode eines MOSFETs wie eine Freilaufdiode.

Die Freilaufbaugruppe hat einen ansteuerbaren zweiten Halbleiterschalter. Dieser ist ein MOSFET, der durch sein Durchlass- und Spenverhalten zwei Schaltzustände generiert und über seinen Gate-Anschluss anzusteuern ist. Die Steuerung des zweiten Halbleiterschalters kann mit Hilfe eines Mikrocontrollers geschehen. Dabei generiert der Mikrocontroller Steuersignale, die das Durchlass- und Sperrverhalten des zweiten Halbleiterschalters einstellen.

Weiterhin hat die Steuerschaltung eine Verpolschutzbaugruppe, die einen ansteuerbaren dritten Halbleiterschalter aufweist. Dieser ist vorzugsweise ein MOSFET, der durch sein Durchlass- und Spenverhalten zwei Schaltzustände generiert und über seinen Gate-Anschluss anzusteuern ist. Die Steuerung des dritten Halbleiterschalters kann mit Hilfe eines Mikrocontrollers geschehen. Dabei generiert der Mikrocontroller Steuersignale, die das Durchlass- und Sperrverhalten des dritten Halbleiterschalters einstellen.

Zur Gewährleistung des Verpolschutzes weist der dritte Halbleiterschalter einen elektrischen Widerstand auf, der bei einem Anschließen der Speisespannungsquelle an die Steuerschaltung mit vertauschter Polung einen Kurzschlussstrom zwischen den Polen der Speisespannungsquelle vermeidet.

Die Erfindung sieht vor, dass der Halbleiterschalter wenigstens einer der Baugruppen mit einem Steuersignal anzusteuern ist. Dabei weist die anzusteuernde Baugruppe wenigstens einen Eingang auf, an dem das Steuersignal einzuspeisen ist.

Dabei ist der Halbleiterschalter der anzusteuernden Baugruppe durch die Ansteuerung in wenigstens zwei Schaltzustände zu versetzen. Je nach Ausgestaltung der Baugruppe kann der Halbleiterschalter in mindestens zwei unterschiedliche Schaltzustände versetzt werden. Wenigstens ein erster und ein zweiter Schaltzustand des jeweiligen Halbleiterschalters sind dadurch einzustellen, dass am ersten Eingang der jeweiligen Baugruppe ein Steuersignal eingespeist wird.

Im ersten einzustellenden Schaltzustand ist der Halbleiterschalter in einen Sperrbetrieb geschaltet. Im zweiten einzustehenden Schaltzustand ist der Halbleiterschalter in einen Durchlassbetrieb geschaltet.

Weiterhin sind unterschiedliche Betriebszustände der Steuerschaltung durch das Ansteuern der Halbleiterschalter einzustellen. Insbesondere sind durch das Ansteuern von wenigstens einem Halbleiterschalter wenigstens zwei unterschiedliche Betriebszustände einzustellen.

In einem ersten Betriebszustand (Normal-Betriebszustand) der Steuerschaltung hat der Halbteiterschalter der Freilaufbaugruppe den ersten Schaltzustand (Sperrbetrieb) und der Halbleiterschalter der Verpolschutzbaugruppe den zweiten Schaltzustand (Durchlassbetrieb). Dabei wird an wenigstens einem ersten Ausgang der Steuerschaltung ein Ausgangssignal bereitgestellt, das einer Diagnoseeinrichtung zuzuführen ist. Die Diagnoseeinrichtung kann die Schaltzustände des ersten Betriebszustandes und Abweichungen hiervon erkennen.

In einem zweiten Betriebszustand (Verpol-Betriebszustand) der Steuerschaltung hat der Halbleiterschalter der Verpolschutzbaugruppe den ersten Schaltzustand (Sperrbetrieb). Dabei wird an wenigstens einem ersten Ausgang der Steuerschaltung ein Ausgangssignal bereitgestellt, das einer Diagnoseeinrichtung zuzuführen ist. Abweichungen hiervon erkennen.

In einem dritten Betriebszustand (Testfall1-Betriebszustand) der Steuerschaltung hat der Halbleiterschalter aller Baugruppen den ersten Schaltzustand (Sperrbetrieb). Dabei wird an wenigstens einem ersten Ausgang der Steuerschaltung ein Ausgangssignal bereitgestellt, das einer Diagnoseeinrichtung zuzuführen ist. Die Diagnoseeinrichtung kann die Schaltzustände des dritten Betriebszustandes und Abweichungen hiervon erkennen.

In einem vierten Betriebszustand (Testfall2-Betriebszustand) der Steuerschaltung hat der Halbleiterschalter der Leistungsansteuerbaugruppe und der Verpolschutzbaugruppe den ersten Schaltzustand (Sperrbetrieb) und der Halbleiterschalter der Freilaufbaugruppe den zweiten Schaltzustand (Durchlassbetrieb). Dabei wird an wenigstens einem ersten Ausgang der Steuerschaltung ein Ausgangssignal bereitgestellt, das einer Diagnoseeinrichtung zuzuführen ist. Die Diagnoseeinrichtung kann die Schaltzustände des vierten Betriebszustandes und Abweichungen hiervon erkennen.

In einem fünften Betriebszustand (Testfall3-Betriebszustand) der Steuerschaltung hat der Halbleiterschalter der Leistungsansteuerbaugruppe und der Freilaufbaugruppe den ersten Schaltzustand (Sperrbetrieb) und der Halbleiterschalter der Verpolschutzbaugruppe den zweiten Schaltzustand (Durchlassbetrieb). Dabei wird an wenigstens einem ersten Ausgang der Steuerschaltung ein Ausgangssignal bereitgestellt, das einer Diagnoseeinrichtung zuzuführen ist. Die Diagnoseeinrichtung kann die Schaltzustände des fünften Betriebszustandes und Abweichungen hiervon erkennen.

Erfindungsgemäß können die Eingänge der Baugruppen derart mit Steuersignalen zu beaufschlagen sein, dass intern hierfür ein Demultiplexer eingesetzt wird. Dabei werden nach einer Schaltfunktion die Steuersignale aus einer seriellen Signalfolge den Eingängen zugeführt. Es sind dadurch unterschiedliche Schaltzustände nach einer Schaltfunktion sequenziell zu generieren. Das Einsetzen unterschiedlicher Schaltsequenzen für eine automatisierte Fehlerüberwachung ist hierdurch möglich, wobei ein Überwachungsprogramm zum Einsatz kommen kann.

Schließlich betrifft die Erfindung eine Diagnoseeinrichtung, die für die Bestimmung von Fehlern in der Steuerschaltung einen Vergleich zwischen dem am ersten Ausgang bereitgestellten Ausgangssignal und Referenzwerten durchführt. Hierbei werden die Vergleiche mittels Schwellenwertentscheidungen durchgeführt.

Aufbau, Funktionsweise und Eigenschaften der Erfindung werden anhand der nachstehend beschriebenen Zeichnungen erläutert.

Fig. 1 zeigt eine bekannte Steuerschaltung bestehend aus einer Leistungsansteuerbaugruppe und einer Freitaufdiode.

Fig. 2 zeigt eine erweiterte Form der bekannten Steuerschaltung, die den Stand der Technik wiedergibt, bestehend aus einer Leistungsansteuerbaugruppe, einer Freilaufbaugruppe und einer Verpolschutzbaugruppe.

Fig. 3 zeigt die eine Fehlerüberwachung aufweisende erfindungsgemäße Steuerschaltung, die eine Leistungsansteuerbaugruppe, eine Freilaufbaugruppe und eine Verpolschutzbaugruppe hat.

Fig. 4 zeigt eine Matrix, in der die an zwei Ausgängen der Steuerschaltung auszulesenden Spannungswerte fünf unterschiedlichen Betriebszuständen der Steuerschaltung zugeordnet sind. Jeder in der Matrix aufgeführte Spannungswert ist durch die Legende erläutert.

### Detaillierte Beschreibung der Ausführunasbeispiele

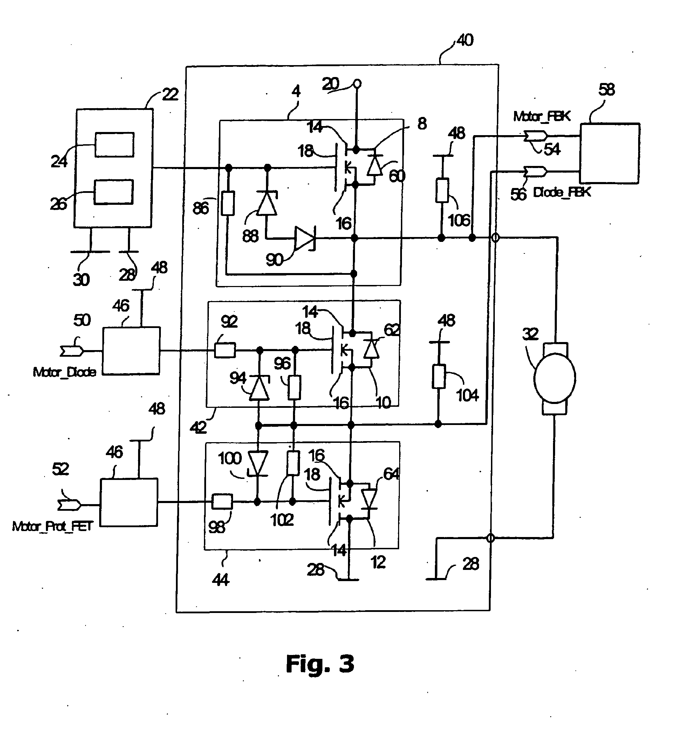

Fig. 3 zeigt eine Steuerschaltung 40, die eine Leistungsansteuerbaugruppe 4, eine Freilaufbaugruppe 42 und eine Verpolschutzbaugruppe 44 hat. Die Leistungsansteuerbaugruppe 4 ist dabei äquivalent zur Leistungsansteuerbaugruppe 4 in Fig. 2. Innerhalb der Steuerschaltung 40 ist die Leistungsansteuerbaugruppe 4 in Reihe geschaltet mit einem Parallelschaltungsteil. Der Gleichstrommotor 32 bildet den ersten Zweig des Parallelschaltungsteils. Der zweite Zweig des Parallelschaltungsteils beinhaltet die Reihenschaltung von Freilaufbaugruppe 42 und Verpolschutzbaugruppe 44.

Die in der Steuerschaltung 40 enthaltenen Baugruppen, Leistungsansteuerbaugruppe 4, Verpolschutzbaugruppe 44 und Freilaufbaugruppe 42, weisen jeweils einen MOSFET 8, 10, 12 mit drei Anschlüssen (Drain 14, Source 16, Gate 18) auf. Jeder MOSFET hat im Sperrbetrieb das Verhalten einer parallel zum MOSFET geschalteten Diode (intrinsische Diode), deren Kathode am Drain-Anschluss 14 und deren Anode am Source-Anschluss 16 des jeweiligen MOSFETs herausgeführt ist.

Der Drain-Anschluss 14 des MOSFETs 8 der Leistungsansteuerbaugruppe 4 ist mit der Speisespannungsquelle 20 verbunden. Durch den Drain-Anschluss 14 des MOSFETs 12 der Verpolschutzbaugruppe 44 ist die Steuerschaltung 40 auf Masse 28 gelegt. Der Drain- 14 und Source-Anschluss 16. des MOSFETs 8 der Leistungsansteuerbaugruppe 4 und des MOSFETs 10 der Freilaufbaugruppe 42 sind so geschaltet, dass die intrinsischen Dioden 60, 62 der MOSFETs 8, 10 durch die Speisespannungsquelle 20 in Durchlassrichtung beansprucht werden. Drain 14 und Source 16 des MOSFETs 12 der Verpolschutzbaugruppe 44 sind dagegen so geschaltet, dass der MOSFET 12 bezüglich der Speisespannungsquelle in Sperrrichtung liegt. Somit sind die Source-Anschlüsse 16 der Freilaufbaugruppe 42 und der Verpolschutzbaugruppe 44 miteinander verbunden. Die MOSFETs 10, 12 der Freilaufbaugruppe 42 und der Verpolschutzbaugruppe 44 sind jeweils über einen ohmschen Widerstand 92, 98 mit dem Gate-Anschluss 18 an separate Pegelumsetzer 46 angeschlossen, die mit einer Speisespannung 48 gespeist werden. Die MOSFETs 10, 12 der Freilaufbaugruppe 42 und der Verpolschutzbaugruppe 44 weisen parallel zu ihrem Gate-Source-Pfad jeweils einen ohmschen Widerstand 96, 102 auf. Ebenfalls parallel zum Gate-source-Pfad der zwei MOSFETs 10, 12 ist jeweils eine Zener-Diode 94, 100 geschaltet, deren Anoden jeweils mit den Source-Anschlüssen 16 der MOSFETs 10, 12 verbunden sind. Die Ansteuerung der Leistungsansteuerbaugruppe 4 wird durch eine Kontrollbaugruppe 22 erreicht. Diese beinhaltet eine Ladungspumpe 24, die die Gate-Spannung für den anzusteuernden MOSFET 8 liefert und einen Mikrocontroller 26 zum Steuern des MOSFETs 8. Ferner ist parallel zum Gate-Source-Pfad des MOSFETs 8 der Leistungsansteuerbaugruppe 4 ein ohmscher Widerstand 86 geschaltet. Ebenfalls parallel zum Gate-Source-Pfad des MOSFETs 8 der Leistungsansteuerbaugruppe 4 ist die Reihenschaltung aus zwei Zener-Dioden 88, 90 geschaltet. Da die Anoden der Zener-Dioden 88, 90 zusammengeschaltet sind, ist deren Wirkung mit der eines elektrischen Widerstandes, bzw. einer bidirektional arbeitenden Begrenzungsdiode zu vergleichen.

Ein Aspekt der Erfindung besteht darin, in die Steuerschaltung 40 eine Fehlerüberwachung zu integrieren. Für die Fehlerüberwachung ist jeweils eine Ansteuermöglichkeit für die Freilaufbaugruppe 42 und die Verpolschutzbaugruppe 44 vorgesehen. Dazu wird der Pegelumsetzer 46 beider Baugruppen mit einem Steuersignal, das von einem externen Mikrocontroller generiert wird, beaufschlagt. In Fig. 3 sind die Eingänge für die Steuersignale mit Motor_Diode 50 und Motor_Prot_FET 52 bezeichnet. Durch die Steuersignale sind die MOSFETs der Freilaufbaugruppe 42 und der Verpolschutzbaugruppe 44 in jeweils zwei unterschiedliche Schaltzustände zu versetzen.

Ferner sind an zwei Ausgängen der Steuerschaltung 40 Spannungswerte auszulesen. Ein erster Ausgang ist hierfür mit dem Source-Anschluss 16 des MOSFETs 10 der Freilaufbaugruppe 42 verbunden. Über einen ohmschen Widerstand 104 ist dieser Ausgang mit einer Speisespannung 48 versorgt. In Fig. 3 trägt der erste Ausgang die Bezeichnung Diode_FBK 56. Der zweite Ausgang ist mit dem Source-Anschluss 16 des MOSFETs 8 der Leistungsansteuerbaugruppe 4 verbunden. Über einen ohmschen Widerstand 106 ist dieser Ausgang mit einer Speisespannung 48 versorgt. In Fig. 3 trägt der zweite Ausgang die Bezeichnung Motor_FBK 54. Beide Ausgänge sind mit einer Diagnoseeinrichtung 58 verbunden.

Die Funktionsweise der in Fig. 3 dargestellten Steuerschaltung 40 wird nachfolgend beschrieben. Liegt keine vertauschte Polung vor, weist die Speisespannungsquelle 20 bezüglich Masse 28 ein positives Potential auf. In diesem Fall wirkt der MOSFET 8 der Leistungsansteuerbaugruppe 4 als Halbleiterschalter, der durch den Mikrocontroller 26 gesteuert, den Gleichstrommotor 32 mit der Speisespannungsquelle 20 verbindet.

Hat die Speisespannungsquelle 20 bezüglich Masse 28 ein positives Potential (nicht verpolt), liefert der Pegelumsetzer 46 der Verpolschutzbaugruppe 44 ein Signal, das der Ansteuerung des MOSFETs 12 der Verpolschutzbaugruppe 44 dient. Aufgrund der Wirkung der intrinsischen Diode 64 des MOSFETs 12 der Verpolschutzbaugruppe 44 weist der Source-Anschluss 16 des MOSFETs 12 anfänglich ein Potential von 0.7V auf. Die aus der Potentialdifferenz zwischen Gate 18 und Source 16 des MOSFETs 12 der Verpolschutzbaugruppe 44 resultierende Spannung $U_{GS}$ bewirkt, dass der MOSFET 12 der Verpolschutzbaugruppe 44 Durchlassverhalten aufweist. Der abnehmende elektrische Widerstand $R_{DS}$ zwischen Drain- 14 und Source-Anschluss 16 des MOSFETs 12 lässt das Source-Potential gegen den Wert Null streben. Gleichzeitig wird die Potentialdifferenz $U_{GS}$ zwischen Source 14 und Gate 16 des MOSFETs 12 weiter angehoben, wodurch sich der elektrische Wiederstand $R_{DS}$ zwischen Drain 14 und Source 16 weiter verringert. Dadurch liegt der Source-Anschluss 16 des MOSFETs 10 der Freilaufbaugruppe 42 annähernd auf dem Massepotential. Findet währenddessen keine Ansteuerung des Gate-Anschlusses 18 des MOSFETs 10 der Freilaufbaugruppe 42 statt, wirkt die intrinsische Diode 62 des MOSFETs 10 wie die aus Fig. 1 bekannte Freilaufdiode 6.

Ist die Speisespannungsquelle 20 mit vertauschter Polung an die Steuerschaltung 40 angeschlossen, hat die Speisespannungsquelle 20 bezüglich Masse 28 ein negatives Potential. In diesem Zustand der Steuerschaltung 40 findet keine Ansteuerung des MOSFETs 12 der Verpolschutzbaugruppe 44 durch ein Ausgangssignal des Pegelumsetzers 46 statt. In Folge dessen weist die Potentialdifferenz zwischen Gate 18 und Source 16 des MOSFETs 12 der Verpolschutzbaugruppe 44 einen Wert $U_{GS}$ nahe Null auf. Dieses bewirkt wiederum einen elektrischen Widerstand $R_{DS}$ zwischen Source 16 und Drain 18 des MOSFETs 12 der Verpolschutzbaugruppe 44 der gegen unendlich geht. Da auch die intrinsische Diode 64 des MOSFETs 12 in Sperrrichtung geschaltet ist, findet ein elektrisches Trennen der mit vertauschter Polung an die Steuerschaltung 40 angeschlossenen Speisespannungsquelle 20 von der Freilaufbaugruppe 42 statt. Die in Durchlassrichtung geschaltete intrinsische Diode 60 der Leistungsansteuerbaugruppe 4 bewirkt, dass die verpolte Speisespannung ausschließlich mit dem Gleichstrommotor 32 belastet wird. Der Gleichstrommotor 32 arbeitet in dieser Situation mit maximaler Drehzahl, wobei eine entgegengesetzte Drehrichtung bezüglich dem Normalbetrieb vorliegt.

Die Fehlerüberwachung der Steuerschaltung 40 beinhaltet das Herbeiführen unterschiedlicher Schaltzustände der MOSFETs 8, 10, 12 und das Verifizieren auszulesender Spannungswerte.

Dazu sind im Stand-by-Betrieb oder bei stehendem Gleichstrommotor 32 die MOSFETs der Freilaufbaugruppe 42 und der Verpolschutzbaugruppe 44 durch Steuersignale einzustellen. Diese Steuersignale sind an den Eingängen Motor_Diode 50 und Motor_Prot_FET 52 einzuspeisen. Auf diese Weise werden unterschiedliche Betriebszustände der Steuerschaltung 40 eingestellt. Gleichzeitig besteht die Möglichkeit an den Ausgängen Motor_FBK 54 und Diode_FBK 56 der Steuerschaltung 40 Spannungswerte auszulesen. Diese Spannungswerte sind einer Diagnoseeinrichtung 58 zuzuführen. Die Diagnoseeinrichtung 58 erkennt nun anhand von Schwellenwertentscheidungen, ob der durch das Einspeisen an den Eingängen Motor_Diode 50 und Motor_Prot_FET 52 eingestellte Betriebszustand erreicht ist. Im Fehlerfall bestimmt die Diagnoseeinrichtung 58 anhand der an den Ausgängen Motor_FBK 54 und Diode_FBK 56 ausgelesenen Spannungswerte, welche Baugruppe einen fehlerhaften, da unerwarteten, Schaltzustand aufweist. Dadurch ist festzustellen, ob und welche Baugruppe einen Defekt oder eine fehlerhafte Ansteuerung aufweist.

Durch die individuelle Ansteuerung der MOSFETs der Freilaufbaugruppe 42, der Verpolschutzbaugruppe 44 und der Leistungsansteuerbaugruppe 4 können mehrere unterschiedliche Betriebszustände der Steuerschaltung 40 eingestellt werden.

Für die nachfolgend betrachteten Betriebszustände sind unterschiedliche Fehlerursachen aufzudecken. Weist die Steuerschaltung einen fehlerfreien Betriebszustand auf, wird das ebenfalls erkannt.

Normal-Betriebszustand

Im Normal-Betriebszustand erfolgt über den Gate-Anschluss 18 des MOSFETs 10 der Freilaufbaugruppe 42 keine Ansteuerung. Der elektrische Widerstand $R_{DS}$ zwischen Drain 14 und Source 16 des MOSFETs 10 hat somit einen gegen unendlich strebenden Wert. Da der MOSFET 12 der Verpolschutzbaugruppe 44 über seinen Gate-Anschluss 18 in diesem Betriebszustand mit einer Speisespannung versorgt wird, bewirkt die Gate-Source-Spannung $U_{GS}$, dass der elektrische Widerstand $R_{DS}$ zwischen Drain 14 und Source 16 des MOSFETs 12 einen minimalen Wert annimmt. Der am Ausgang Diode_FBK 56 auszulesende Spannungswert hat in diesem Fall aufgrund der fehlenden Differenz zum Massepotential den Wert Null.

Wird dagegen ein Wert $V_{F\_62}$ diagnostiziert, der dem Wert der Durchlassspannung der intrinsischen Diode 62 des MOSFETs 10 der Freilauftbaugruppe 42 entspricht, ist eine fehlerfreie Funktion der Verpolschutzbaugruppe 44 nicht gegeben. In diesem Fall liegt eine defekte Verpolschutzbaugruppe 44 oder eine fehlerhafte Ansteuerung der Verpolschutzbaugruppe 44 vor.

Verpol-Betriebszustand

Im Verpol-Betriebszustand weist die Speisespannungsquelle 20 bezüglich der Masse 28 ein negatives Potential auf. Der Gate-Anschluss 18 des MOSFETs 12 der Verpolschutzbaugruppe 44 wird in diesem Betriebszustand nicht angesteuert. Die fehlende Ansteuerung bewirkt, das der elektrische Widerstand $R_{DS}$ zwischen Drain 14 und Source 16 des MOSFETs 12 einen Wert gegen unendlich annimmt. Auch die intrinsische Diode 64 des MOSFETs 12 ist in Sperrrichtung geschaltet.

Der am Ausgang Diode_FBK 56 auszulesende Spannungswert resultiert dann aus der Summe der negativen Speisespannung $U_{BAT}$, der Durchlassspannung $V_{F\_60}$ der intrinsischen Diode 60 der Leistungsansteuerbaugruppe 4 und der Durchlassspannung $V_{F\_62}$ der intrinsischen Diode 62 der Freilaufbaugruppe 42, wie die nachfolgende Formel verdeudicht. Dieser Spannungswert ist in der Diagnoseeinrichtung mit Hilfe von Schwellenwertentscheidungen bestimmbar.

$$U_{Diode\_FBK} = -U_{BAT} + V_{F\_60} + V_{F\_62}\ .$$

Testfall1-Betriebszustand

Im Testfall1-Betriebszustand wird keiner der MOSFETs 8, 10, 12 angesteuert. Der elektrische Widerstand $R_{DS}$ zwischen Drain 14 und Source 16 der MOSFETs weist einen unendlichen Widerstand auf. Die am Ausgang Diode_FBK 56 auszulesende Spannung nimmt in diesem Betriebszustand den Wert der Durchlassspannung einer der beiden intrinsischen Dioden 64 des MOSFETs 12 oder 62 des MOSFETs 10, beispielsweise den Wert $V_{F\_64}$, an.

Zeigt die Diagnoseeinrichtung 58 jedoch der Wert Null an, deutet das, dass ein Kurzschluss der Freilaufbaugruppe 42 oder der Verpolschutzbaugruppe 44 vorliegt. Es liegt in diesem Fall ein fehlerhaftes Schaltverhalten oder eine fehlerhafte Ansteuerung der Baugruppen vor.

Wird hingegen der Wert $V_{F\_62}$ diagnostiziert, bedeutet das, dass die intrinsische Diode 64 des MOSFETs 12 der Verpolschutzbaugruppe 44 kein Durchlassverhalten aufweist, was auf einen Defekt des MOSFETs 12 der Verpolschutzbaugruppe 44 hindeutet.

Der zweite am Ausgang Motor_FBK 54 auszulesende Spannungswert weist bei fehlerfreiem Schaltverhalten den Wert Null auf. Wird hingegen der Spannungswert $U_{BAT}$ erkannt, deutet das darauf hin, dass eine Unterbrechung der elektrischen Verbindung zwischen dem Gleichstrommotor 32 und der Steuerschaltung 40 vorliegt.

Testfall2-Betriebszustand

Im Testfall2-Betriebszustand wird ausschließlich der MOSFET 10 der Freilaufbaugruppe 42 angesteuert. Der elektrische Widerstand $R_{DS}$ zwischen Drain 14 und Source 16 der MOSFETs der Leistungsansteuerbaugruppe 4 und der Verpolschutzbaugruppe 44 strebt gegen den Wert unendlich. In diesem Betriebszustand weisen die an den Ausgängen Motor_FBK 54 und Diode_FBK 56 auszulesenden Spannungswerte den Wert Null auf.

Erkennt die Diagnoseeinrichtung 58 hingegen am Ausgang Diode_FBK 56 die Durchlassspannung $V_{F\_64}$ der intrinsischen Diode 64 der Verpolschutzbaugruppe 44, deutet das darauf hin, dass der MOSFET 10 der Freilaufbaugruppe 42 Sperrverhalten aufweist. Ursache hierfür ist ein Defekt des MOSFETs 10 der Freilaufbaugruppe 42 oder dessen fehlerhafte Ansteuerung.

Weist die am Ausgang Motor_FBK 54 auszulesende Spannung den Wert der Durchlassspannung $V_{F\_64}$ der intrinsischen Diode 64 der Verpolschutzbaugruppe 44 auf, ist auf eine Unterbrechung der elektrischen Verbindung zwischen Gleichstrommotor 32 und Steuerschaltung 40 zu schließen.

Testfall3-Betriebszustand

Im Testfall3-Betriebszustand wird ausschließlich der MOSFET 12 der Verpolschutzbaugruppe 44 über den Gate-Anschluss 18 angesteuert. Der elektrische Widerstand $R_{DS}$ zwischen Drain 14 und Source 16 der MOSFETs der Leistungsansteuerbaugruppe 4 und der Freilaufbaugruppe 42 strebt gegen den Wert unendlich. Die am Ausgang Diode_FBK 56 auszulesende Spannung weist den Wert Null auf, da es keinen Potentialunterschied zwischen Masse 28 und dem Ausgang Diode_FBK 56 gibt.

Erkennt die Diagnoseeinrichtung jedoch den Wert der Durchlassspannung $V_{F\_62}$ der intrinsischen Diode 62 des MOSFETs 10 der Freilaufbaugruppe 42, bedeutet das, dass der angesteuerte MOSFET 12 der Verpolschutzbaugruppe 44 sowie dessen intrinsische Diode 64 Sperrverhalten aufweisen. Das wiederum bedeutet einen Defekt der Verpolschutzbäugruppe 44 oder deren fehlerhafte Ansteuerung.

Weist die am Ausgang Motor_FBK 54 auszulesende Spannung den Wert $U_{BAT}$ auf, ist auf eine Unterbrechung der elektrischen Verbindung zwischen Gleichstrommotor 32 und Steuerschaltung 40 zu schließen.

Für eine effektive Kontrolle der Funktionsfähigkeit der Steuerschaltung 40 sind die unterschiedlichen Betriebszustände nacheinander einzustellen. Die hierfür benötigte Ansteuerung der Baugruppen ist mit Hilfe eines Mikrocontrollers durchzuführen. Ferner kann die Ansteuerung auch mit Hilfe eines Demultiplexers vorgenommen werden. Diese Lösung sieht vor, das die Schaltfunktion des Demultiplexers den Eingängen der Baugruppen nacheinander Steuersignale zuweist. Die sequentielle Einstellung unterschiedlicher Betriebszustände mit Hilfe eines Demultiplexers ist dadurch zu erreichen, dass sich aufeinanderfolgende Betriebszustände nur durch das Ändern eines einzulesenden Steuersignals ineinander überführen lassen.

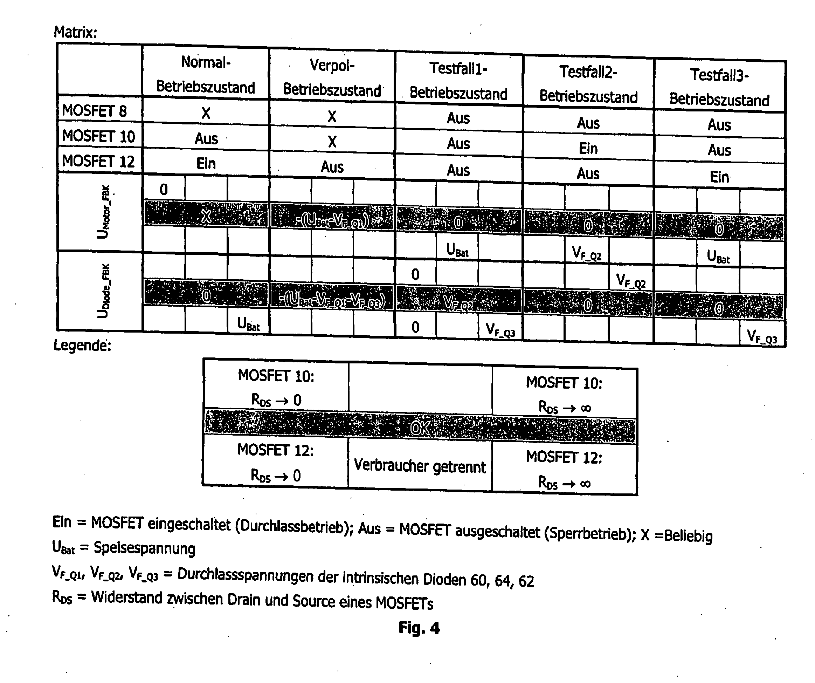

In Fig. 4 sind an Ausgang Motor_FBK 54 und Diode_FBK 56 auszulesende Spannungswerte fünf unterschiedlicher Betriebszustände in einer Matrix zusammengefasst. Dargestellt sind die Spannungswerte für den Normal-Betriebszustand, Verpol-Betriebszustand, Testfall1-Betriebszustand, Testfall2-Betriebszustand und Testfall3-Betriebszustand. Der Schaltzustand des MOSFETs 8 der Leistungsansteuerbaugruppe 4, des MOSFETs 10 der Freilaufbaugruppe 42 und des MOSFETs 12 der Verpolschutzbaugruppe 44 ist für jeden der fünf Betriebszustände durch die Bezeichnungen Ein, Aus und X (= Beliebig) beschrieben. Werden diese Schaltzustände der MOSFETs 8, 10, 12 fehlerfrei erreicht, sind die in der Matrix grau hinterlegten Spannungswerte an den Ausgängen Motor_FBK 54 und Diode_FBK 56 auszulesen und durch die Diagnoseeinrichtung 58 zu erkennen. Wird in einem Betriebszustand ein vom grau hinterlegten Spannungswert abweichender Spannungswert erkannt, liegt ein fehlerhaftes Schaltverhalten der MOSFETs 8, 10, 12 vor. Die abweichenden Spannungswerte sind für jeden der fünf Betriebszustände unter und über dem grau hinterlegten Spannungswert aufgeführt. Mit der Legende in Fig. 4 ist anhand der Lage der abweichenden Spannungswerte in der Matrix die Ursache für das Abweichen zu bestimmen. Eine mögliche Ursache hierfür ist ein Kurzschluss ($R_{DS} \rightarrow 0$) des Drain-Source-Pfades des MOSFETs 10 der Freilaufbaugruppe 42 oder des MOSFETs 12 der Verpolschutzbaugruppe 44. Eine weitere Ursache ist ein unendlich großer Widerstand ($R_{DS} \rightarrow \infty$) des Drain-Source-Pfades des MOSFETs 10 der Freilaufbaugruppe 42 oder des MOSFETs 12 der Verpolschutzbaugruppe 44. Ferner ist die Trennung des Gleichstrommotors 32 von der Steuerschaltung 40 eine Ursache. Die genannten Ursachen sind auf einen Defekt oder auf eine fehlerhafte Ansteuerung einer der Baugruppen zurückzuführen.

**Patentansprüche**

1. Steuerschaltung (40) für einen an eine Spelsespannungsquelle (20) anzuschließenden elektrischen Verbraucher (32) mit induktivem Lastanteil, mit

   - einer Leishrngsansteuerbaugruppe (4), um den Verbraucher gesteuert mit der Speisespannungsquelle (20) elektrisch zu verbinden oder von ihr zu trennen,
   - einer Freilaufbaugruppe (42), um eine bei einem elektrischen Trennen des Verbrauchers von der Speisespannungsquelle (20) auftretende elektrische Spannungsspitze zu vermeiden und

- einer Verpolschutzbaugruppe (44), die bei einem Anschlleßen der Spetsespannungsquelle (20) an die Steuerschaltung (40) mit vertauschter Polung einen Kurzschlussstrorn zwischen den Polen der Spetsespannungsquelle (20) vermeldet,

wobei

- in der Steuerschaltung (40) die Leistungsansteuerbaugruppe (4) in Reihe geschaltet ist mit einem Parallelschaltungsteil, in dem der elektrische Verbraucher (32) einen ersten Zweig bildet und ein zweiter Zweig eine Reihenschaltung von Freilauibaugruppe (42) und Verpolschutzbaugruppe (44) beinhaltet, **dadurch gekennzeichnet, dass**

- die Steuerschaltung (40) zwei Ausgänge (54, 56) hat, die mit einer Diagnoseeinrichtung (58) verbunden sind**,** wobei

-- der erste Ausgang (54) ein Ausgang der Freilaufbaugruppe (42) ist, und
-- der zweite Ausgang (56) ein Ausgang der Leistungsansteuerbaugruppe (4) ist,

- wenigstens eine der Baugruppen an einem ersten Eingang mit einem Steuersignal zu beaufschlagen ist, um an wenigstens einem Ausgang ein Ausgangssignal bereitzustellen, das der Diagnoseeinrichtung (58) für die Bestimmung von Fehlern in der Steuerschaltung (40) zuzuführen ist, wobei

- die Diagnoseeinrichtung (58) dazu eingerichtet ist,

-- für die Bestimmung von Fehlern in der Steuerschaltung (40) einen Vergleich zwischen dem am ersten Ausgang bereibgesbeilten Ausgangssignal und einem schwellenwert durchzuführen und
-- durch den Vergleich von Ausgangssignal und Schwellenwert festrustellen, ob und welche Baugruppe einen Defekt oder eine fehlerhafte Ansteuerung aufweist, und wobei
-- die Steuerschaltung (40) unterschiedliche Betriebszustände nacheinander einstellt indem den Eingängen der Baugruppen nacheinander Steuersignale zugewiesen werden um an wenigstens einem Ausgang der Baugruppen ein Ausgangssignal bereitzustellen, das der Diagnoseeinrichtung (58) zuzuführen ist.

2. Steuerschaltung (40) nach Anspruch 1, an die ein mit Glelchstrom zu betreibender Elektromotor (32) als Verbraucher anzuschließen ist.

3. Steuerschaltung (40) nach Anspruch 1 oder 2, **dadurch gekennzeichnet, dass** die Leistungsansteuerbaugruppe (4) einen steuerbaren ersten Halbleiterschalter aufweist, durch den der Verbraucher mit der Speisespannungsquelle (20) elektrisch zu verbinden oder von ihr zu trennen ist.

4. Steuerschaltung (40) nach Anspruch 1 oder 2, **dadurch gekennzeichnet, dass** die Freilauftbaugruppe (42) eine Freilaufdiode aufweist, die die elektrische Spannungsspitze abbaut, welche durch das elektrische Trennen der Spelsespannungsquelle (20) vom Verbraucher durch Selbstinduktion entsteht.

5. Steuerschaltung (40) nach Anspruch 1 oder 2, **dadurch gekennzeichnet, dass** die Freilaufbaugruppe (42) einen steuerbaren zweiten Halbleiterschalter aufweist.

6. Steuerschaltung (40) nach Anspruch 1 oder 2, **dadurch gekennzeichnet, dass** die Verpolschutzbaugruppe (44) einen steuerbaren dritten Halbleiterschater aufweist.

7. Steuerschaltung (40) nach Anspruch 6, **dadurch gekennzeichnet dass** der Halbleiterschalter der Verpotschutzbaugruppe (44) einen elektrischen Widerstand hat, durch den bei einem Anschließen der Speisespannungsquelle (20) an die Steuerschaltung (40) mit vertauschter Polung ein Kurzschlussstrom zwischen den Polen der Speisespannungsquelle (20) zu vermeiden ist.

8. Steuerschaltung (40) nach Anspruch 1 oder 2, **dadurch gekennzeichnet dass** ein Halbieiterschater weinigstens einer der Baugruppen mit dem am ersten Eingang der jeweiligen Baugruppe einzuspeisenden Steuersignal anzusteuern ist.

9. Steuerschaltung (40) nach Anspruch 8, **dadurch gekennzeichnet dass** der Halbleiterschalter wenigstens einer Baugruppe mit dem am ersten Eingang der jeweiligen Baugruppe einzuspeisenden Steuersignal in wenigstens zwei unterschiedliche Schaltzustände zu versetzen ist.

10. Steuerschaltung (40) nach Anspruch 9, **dadurch gekennzeichnet dass** ein erster Schaltzustand des jeweiligen Halbleiterschalters dadurch einzustellen ist, dass der Halbleiterschalter durch das am ersten Eingang der jeweiligen Baugruppe zu beaufschlagende Steuersignal in einen Durchlassbetrieb geschaltet wird und ein zweiter Schaltzustand des jeweiligen Halblelterschalters dadurch einzustellen ist, dass der Halbleiterschalter durch das am ersten Eingang der jeweiligen Baugruppe zu beaufschlagende Steuersignal in einen Sperrbetrieb geschaltet wird.

**11.** Steuerschaltung (40) nach Anspruch 8, **dadurch gekennzeichnet, dass** durch das Ansteuern von wenigstens einem Halbleiterschalter wenigstens zwei unterschiedliche Betriebszustände der Steuerschaltung (40) einzustellen sind.

**12.** Steuerschaltung (40) nach Anspruch 10 und 11, **dadurch gekennzeichnet dass** in einem ersten Betriebszustand der Steuerschaltung (40) der Halbleiterschalter der Fretlaufbaugruppe (42) den ersten Schaltzustand und der Halblefterschater der Verpotschutzbaugruppe (44) den zweiten Schaltzustand aufweist, um an wenigstens einem ersten Ausgang ein Ausgangssignal bereitzustellen, das der Diagnoseetnrichtung (58) zuzuführen ist, die die Schaltzustände des ersten Betriebszustandes und Abweichungen hiervon diagnostwert, indem sie das Ausgangssignal mit Referenzwerten vergleicht.

**13.** Steuerschaltung (40) nach Anspruch 10 und 11, **dadurch gekennzeichnet, dass** in einem zweiten Betriebszustand der Steuerschaltung (40) der Halbleiterschalter der Verpolschutzbaugruppe (44) den ersten Schattzustand aufweist, um an wenigstens einem ersten Ausgang ein Ausgangssignal bereitzustellen, das der Diagnoseeinrichtung (58) zuzuführen ist, die die Schaltzustände des zweiten Betnebszustandes und Abweichungen hiervon diagnostiziert, indem sie das Ausgangssignal mit Referenzwerten vergleicht

**14.** Steuerschaltung (40) nach Anspruch 10 und 11, **dadurch gekennzeichnet, dass** In einem dritten Betriebszustand der Steuerschaltung (40) die Hatbletterschalter aller Baugruppen den ersten Schaltzustand aufweisen, um an wenigstens einem ersten Ausgang ein Ausgangssignal bereitzustert, das der Diagnoseeinrichtung (58) zuzuführen ist, die die Schaltzustände des dritten Betriebszustandes und Abweichungen hiervon dlagnostiziert, indem sie das Ausgangssignal mit Referenzwerten vergleicht.

**15.** Steuerschaltung (40) nach Anspruch 10 und 11, **dadurch gekennzeichnet dass** in einem vierten Betriebszustand der Steuerschaltung (40) der Halbleiterschalter der Letstungsansteuerbaugruppe (4) und der Verpolschutzbaugruppe (44) den ersten Schaltzustand aufweist und der Halbleiterschalter der Frellautbaugruppe (42) den zweiten Schaltzustand aufweist, um an wenigstens einem ersten Ausgang ein Ausgangssignal bereitzustellen, das der Diagnoseeinrichtung (58) zuzuführen ist, die die Schaltzustände des vierten Betriebszustandes und Abweichungen hiervon diagnostiziert, indem sie das Ausgangssignal mit Referenzwerten vergleicht.

**16.** Steuerschaltung (40) nach Anspruch 10 und 11, **dadurch gekennzeichnet, dass** In einem fünften Betriebszustand der Steuerschaltung (40) die Halbleiterschalter der Leistungsansteuerbaugruppe (4) und der Freilaufbaugruppe (42) den ersten Schaltzustand aufweisen und der Halbleitershalter der Verpolschutzbaugruppe (44) den zweiten Schaltzustand aufweist, um an wenigstens einem ersten Ausgang ein Ausgangssignal bereitzustellen, das der Diagnoseeinrichtung (58) zuzuführen ist, die die Schaltzustände des fünften Betriebsantandes und Abweichungen hiervon diagnostiziert indem sie das Ausgangssignal mit Referenzwerten vergleicht

**17.** Steuerschaltung (40) nach Anspruch 1 oder 2, dadurch gekenntzeichnet dass der Eingang der Baugruppen mit einem Demultiplexer nach einer Schaltfunktion mit einem Steuersignal zu beaufschlagen ist.

## Claims

**1.** Control circuit (40) for an electric consumer (32) with an inductive load portion, to be connected to a feed voltage source (20), with

- a power driving assembly (4) to connect the consumer electrically in controlled manner to the feed voltage source (20) or to disconnect it therefrom,
- a free-wheeling assembly (42) to avoid an electric voltage peak occurring when the consumer is electrically disconnected from the feed voltage source (20) and
- a reverse-connection protected assembly (44), which avoids a short circuit current between the poles of the feed voltage source (20) when the feed voltage source (20) is connected to the control circuit (40) with reversed polarity,

wherein

- in the control circuit (40) the power driving assembly (4) is switched in series with a parallel switching part in which the electric consumer (32) forms a first branch and a second branch contains a series circuit of free-wheeling assembly (42) and reverse-connection protected assembly (44),

**characterized in that**

- the control circuit (40) has two outputs (54, 56) which are connected to a diagnostic device (58), wherein

-- the first output is an output of the free-wheeling assembly (42) and
-- the second output (56) is an output of the power driving assembly (4),

- at least one of the assemblies is to be impinged with a control signal at a first input, in order to provide at at least one output an output signal, which is to be supplied to the diagnostic device (58) to determine failures in the control circuit (40), wherein
- the diagnostic device (58) is equipped

-- to perform a comparison between the output signal provided at the first output and a threshold value, to determine failures in the control circuit (40) and
-- by comparing the output signal and the threshold value, to establish whether and which assembly has a defect or defective driving and wherein
-- the control circuit (40) sets different operating statuses in succession **in that** control signals are assigned to the inputs of the assemblies in succession in order to provide at at least one output of the assemblies an output signal, which is to be supplied to the diagnostic device (58).

2. Control circuit (40) according to claim 1, to which an electric motor (32) to be operated by direct current is to be connected as consumer.

3. Control circuit (40) according to claim 1 or 2, **characterized in that** the power driving assembly (4) has a controllable first semi-conductor switch by which the consumer is to be electrically connected to the feed voltage source (20) or disconnected from it.

4. Control circuit (40) according to claim 1 or 2, **characterized in that** the free-wheeling assembly (42) has a free-wheeling diode, which reduces the electric voltage peak caused by the electrical disconnection of the feed voltage source (20) from the consumer by self-induction.

5. Control circuit (40) according to claim 1 or 2, **characterized in that** the free-wheeling assembly (42) has a controllable second semi-conductor switch.

6. Control circuit (40) according to claim 1 or 2, **characterized in that** the reverse-connection protected assembly (44) has a controllable third semi-conductor switch.

7. Control circuit (40) according to claim 6, **characterized in that** the semi-conductor switch of the reverse-connection protected assembly (44) has an electric resistance by which a short circuit current between the poles of the feed voltage source (20) is to be avoided if the feed voltage source (20) is connected to the control circuit (40) with reversed polarity.

8. Control circuit (40) according to claim 1 or 2, **characterized in that** a semiconductor switch of at least one of the assemblies is to be driven by the control signal to be fed in at the first input of the respective assembly.

9. Control circuit (40) according to claim 8, **characterized in that** the semiconductor switch of at least one assembly is to be transferred into at least two different switching statuses with the control signal to be fed in at the first input of the respective assembly.

10. Control circuit (40) according to claim 9, **characterized in that** a first switching status of the respective semiconductor switch is to be set by switching the semiconductor switch into conductive operation by the control signal to be impinged at the first input of the respective assembly and a second switching status of the respective semiconductor switch is to be set by switching the semiconductor switch into blocking operation by the control signal to be impinged at the first input of the respective assembly.

11. Control circuit (40) according to claim 8, **characterized in that** at least two different operating statuses of the control circuit (40) are to be set by driving at least one semiconductor switch.

12. Control circuit (40) according to claim 10 and 11, **characterized in that** in a first operating status of the control circuit (40) the semiconductor switch of the free-wheeling assembly (42) has the first switching status and the semiconductor switch of the reverse-connection protected assembly (44) has the second switching status, in order to provide at at least one first output an output signal, which is to be supplied to the diagnostic device (58), which diagnoses the switching statuses of the first operating status and deviations therefrom by comparing the output signal with reference values.

13. Control circuit (40) according to claim 10 and 11, **characterized in that** in a second operating status of the control circuit (40) the semiconductor switch of the reverse-connection protected assembly (44) has the first switching status, in order to provide at at least one first output an output signal, which is to be supplied to the diagnostic device (58), which diagnoses the switching statuses of the second operating status and deviations therefrom by comparing the output signal with reference values.

**14.** Control circuit (40) according to claim 10 and 11, **characterized in that** in a third operating status of the control circuit (40) the semiconductor switches of all the assemblies have the first switching status, in order to provide at at least one first output an output signal, which is to be supplied to the diagnostic device (58), which diagnoses the switching statuses of the third operating state and deviations therefrom by comparing the output signal with reference values.

**15.** Control circuit (40) according to claim 10 and 11, **characterized in that** in a fourth operating status of the control circuit (40) the semiconductor switch of the power driving assembly (4) and the reverse-connection protected assembly (44) has the first switching status and the semiconductor switch of the free-wheeling assembly (42) has the second switching status, in order to provide at at least one first output an output signal, which is to be supplied to the diagnostic device (58), which diagnoses the switching statuses of the fourth operating status and deviations therefrom by comparing the output signal with reference values.

**16.** Control circuit (40) according to claim 10 and 11, **characterized in that** in a fifth operating status of the control circuit (40) the semiconductor switches of the power driving assembly (4) and the free-wheeling assembly (42) have the first switching status and the semiconductor switch of the reverse-connection protected assembly (44) has the second switching status, in order to provide at at least one first output an output signal, which is to be supplied to the diagnostic device (58) which diagnoses the switching statuses of the fifth operating status and deviations therefrom by comparing the output signal with reference values.

**17.** Control circuit (40) according to claim 1 or 2, **characterized in that** the input of the assemblies is to be impinged with a control signal by a demultiplexer after a switching function.

## Revendications

**1.** Circuit de commande (40) destiné à un appareil consommateur électrique (32) à fraction de charge inductive, qui est à raccorder à une source de tension d'alimentation (20), le circuit comprenant

- un module de commande de puissance (4) pour relier ou isoler électriquement, de manière commandée, l'appareil consommateur à ou respectivement de la source de tension d'alimentation (20),
- un module de roue libre (42) pour éviter une crête de tension électrique apparaissant lors de l'isolement électrique de l'appareil consommateur de la source de tension d'alimentation (20), et
- un module de protection contre l'inversion des pôles (44), qui, dans le cas d'un raccordement de la source de tension d'alimentation (20) au circuit de commande (40) avec une inversion des pôles, évite un courant de court-circuit entre les pôles de la source de tension d'alimentation (20),

dans lequel

- le module de commande de puissance (4) est monté, dans le circuit de commande (40), en série avec une partie de circuit parallèle dans lequel l'appareil consommateur électrique (32) forme une première branche et une deuxième branche renferme un circuit série composé du module de roue libre (42) et du module de protection contre l'inversion des pôles (44),

**caractérisé**

- **en ce que** le circuit de commande (40) possède deux sorties (54, 56) qui sont reliées à un dispositif de diagnostic (58),

-- la première sortie (54) étant une sortie du module de roue libre (42), et
-- la deuxième sortie (56) étant une sortie du module de commande de puissance (4),

- **en ce qu'**au moins l'un des modules est à alimenter, à une première entrée, par un signal de commande, pour fournir à au moins une sortie, un signal de sortie à transmettre au dispositif de diagnostic (58) pour la détermination d'erreurs dans le circuit de commande (40),
- le dispositif de diagnostic (58) étant conçu

-- pour effectuer, en vue de la détermination d'erreurs dans le circuit de commande (40), une comparaison entre le signal de sortie fourni au niveau de la première sortie et une valeur de seuil, et
-- pour constater, par la comparaison entre le signal de sortie et la valeur de seuil, si un module et quel module présente un défaut ou est commandé de manière erronée, et
-- le circuit de commande (40) établissant successivement différents états de fonctionnement en affectant successivement des signaux de commande aux entrées des modules, pour fournir à au moins une sortie des modules, un signal de sortie à transmettre au dispositif de diagnostic (58).

**2.** Circuit de commande (40) selon la revendication 1, auquel doit être raccordé en guise d'appareil consommateur, un moteur électrique (32) à faire fonctionner à l'aide de courant continu.

**3.** Circuit de commande (40) selon la revendication 1 ou la revendication 2, **caractérisé en ce que** le module de commande de puissance (4) présente un premier commutateur à semi-conducteur pouvant être commandé, par l'intermédiaire duquel l'appareil consommateur est à relier électriquement à ou à isoler électriquement de la source de tension d'alimentation (20).

**4.** Circuit de commande (40) selon la revendication 1 ou la revendication 2, **caractérisé en ce que** le module de roue libre (42) présente une diode de roue libre, qui dégrade la crête de tension électrique se produisant par auto-induction lors de l'isolement électrique de la source de tension d'alimentation (20) de l'appareil consommateur.

**5.** Circuit de commande (40) selon la revendication 1 ou la revendication 2, **caractérisé en ce que** le module de roue libre (42) présente un deuxième commutateur à semi-conducteur pouvant être commandé.

**6.** Circuit de commande (40) selon la revendication 1 ou la revendication 2, **caractérisé en ce que** le module de protection contre l'inversion des pôles (44) présente un troisième commutateur à semi-conducteur pouvant être commandé.

**7.** Circuit de commande (40) selon la revendication 6, **caractérisé en ce que** le commutateur à semi-conducteur du module de protection contre l'inversion des pôles (44) présente une résistance électrique, qui, dans le cas d'un raccordement de la source de tension d'alimentation (20) au circuit de commande (40) avec une inversion des pôles, doit permettre d'éviter un courant de court-circuit entre les pôles de la source de tension d'alimentation (20).

**8.** Circuit de commande (40) selon la revendication 1 ou la revendication 2, **caractérisé en ce qu'**un commutateur à semi-conducteur de l'un au moins des modules est à commander par le signal de commande à appliquer à la première entrée du module respectivement considéré.

**9.** Circuit de commande (40) selon la revendication 8, **caractérisé en ce que** le commutateur à semi-conducteur d'au moins un module est à transférer, à l'aide du signal de commande à appliquer à la première entrée du module respectivement considéré, dans au moins deux états de commutation différents.

**10.** Circuit de commande (40) selon la revendication 9, **caractérisé en ce qu'**il est possible d'établir un premier état de commutation du commutateur à semi-conducteur respectivement considéré, grâce au fait que le commutateur à semi-conducteur est commuté dans un mode de fonctionnement passant par le signal de commande devant alimenter la première entrée du module respectivement considéré, et d'établir un deuxième état de fonctionnement grâce au fait que le commutateur à semi-conducteur est commuté dans un mode de fonctionnement bloquant par le signal de commande devant alimenter la première entrée du module respectivement considéré.

**11.** Circuit de commande (40) selon la revendication 8, **caractérisé en ce que** la commande d'au moins un commutateur à semi-conducteur doit permettre d'établir au moins deux états de fonctionnement différents du circuit de commande (40).

**12.** Circuit de commande (40) selon la revendication 10 et la revendication 11, **caractérisé en ce que** dans un premier état de fonctionnement du circuit de commande (40), le commutateur à semi-conducteur du module de roue libre (42) présente le premier état de commutation, et le commutateur à semi-conducteur du module de protection contre l'inversion des pôles (44) présente le deuxième état de commutation, en vue de fournir à au moins une première sortie, un signal de sortie à transmettre au dispositif de diagnostic (58) qui diagnostique les états de commutation du premier état de fonctionnement et des écarts par rapport à ceux-ci, en comparant le signal de sortie avec des valeurs de référence.

**13.** Circuit de commande (40) selon la revendication 10 et la revendication 11, **caractérisé en ce que** dans un deuxième état de fonctionnement du circuit de commande (40), le commutateur à semi-conducteur du module de protection contre l'inversion des pôles (44) présente le premier état de commutation, en vue de fournir à au moins une première sortie, un signal de sortie à transmettre au dispositif de diagnostic (58) qui diagnostique les états de commutation du deuxième état de fonctionnement et des écarts par rapport à ceux-ci, en comparant le signal de sortie avec des valeurs de référence.

**14.** Circuit de commande (40) selon la revendication 10 et la revendication 11, **caractérisé en ce que** dans un troisième état de fonctionnement du circuit de commande (40), les commutateurs à semi-conducteur de tous les modules présentent le premier état de commutation, en vue de fournir à au moins une première sortie, un signal de sortie à transmettre au dispositif de diagnostic (58) qui diagnostique les états de commutation du troisième état de fonctionnement et des écarts par rapport à ceux-ci, en comparant le signal de sortie avec des valeurs de référence.

**15.** Circuit de commande (40) selon la revendication 10 et la revendication 11, **caractérisé en ce que** dans un quatrième état de fonctionnement du circuit de commande (40), le commutateur à semi-conducteur du module de commande de puissance (4) et du module de protection contre l'inversion des pôles (44) présente le premier état de commutation, et le commutateur à semi-conducteur du module de roue libre (42) présente le deuxième état de commutation, en vue de fournir à au moins une première sortie, un signal de sortie à transmettre au dispositif de diagnostic (58) qui diagnostique les états de commutation du quatrième état de fonctionnement et des écarts par rapport à ceux-ci, en comparant le signal de sortie avec des valeurs de référence.

**16.** Circuit de commande (40) selon la revendication 10 et la revendication 11, **caractérisé en ce que** dans un cinquième état de fonctionnement du circuit de commande (40), les commutateurs à semi-conducteur du module de commande de puissance (4) et du module de roue libre (42) présentent le premier état de commutation, et le commutateur à semi-conducteur du module de protection contre l'inversion des pôles (44) présente le deuxième état de commutation, en vue de fournir à au moins une première sortie, un signal de sortie à transmettre au dispositif de diagnostic (58) qui diagnostique les états de commutation du cinquième état de fonctionnement et des écarts par rapport à ceux-ci, en comparant le signal de sortie avec des valeurs de référence.

**17.** Circuit de commande (40) selon la revendication 1 ou la revendication 2, **caractérisé en ce que** l'entrée des modules est à alimenter par un démultiplexeur, avec un signal de commande, selon une fonction de commutation.

**Fig. 1**

**Fig. 2**

**Fig. 3**

Matrix:

| | Normal-Betriebszustand | Verpol-Betriebszustand | Testfall1-Betriebszustand | Testfall2-Betriebszustand | Testfall3-Betriebszustand |
|---|---|---|---|---|---|
| MOSFET 8 | X | X | Aus | Aus | Aus |
| MOSFET 10 | Aus | X | Aus | Ein | Aus |
| MOSFET 12 | Ein | Aus | Aus | Aus | Ein |
| $U_{Motor\_FBK}$ | 0 / X | $=(U_{Bat}-V_{F\_Q1})$ | 0 | 0 | 0 |
| $U_{Diode\_FBK}$ | 0 / $U_{Bat}$ | $=(U_{Bat}-V_{F\_Q1}-V_{F\_Q3})$ | $U_{Bat}$ / 0 / $V_{F\_Q2}$ / 0 | $V_{F\_Q2}$ / $V_{F\_Q2}$ / 0 | $U_{Bat}$ / 0 / $V_{F\_Q3}$ |

Legende:

| MOSFET 10: $R_{DS} \to 0$ | | MOSFET 10: $R_{DS} \to \infty$ |
|---|---|---|
| | OK | |
| MOSFET 12: $R_{DS} \to 0$ | Verbraucher getrennt | MOSFET 12: $R_{DS} \to \infty$ |

Ein = MOSFET eingeschaltet (Durchlassbetrieb); Aus = MOSFET ausgeschaltet (Sperrbetrieb); X =Beliebig

$U_{Bat}$ = Speisespannung

$V_{F\_Q1}$, $V_{F\_Q2}$, $V_{F\_Q3}$ = Durchlassspannungen der intrinsischen Dioden 60, 64, 62

$R_{DS}$ = Widerstand zwischen Drain und Source eines MOSFETs

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10050287
- DE 10118401
- DE 19941489
- DE 10050287 A1